# FASCICULE DE BREVET EUROPEEN

(11) **EP 2 097 203 B1**
(45) Date de publication et mention de la délivrance du brevet: **04.06.2014**
(21) Numéro de dépôt: 07866464.6
(22) Date de dépôt: 30.10.2007
(51) Int. Cl.: B23K 3/08

(54) **PROCEDE DE BRASAGE ET DISPOSITIF CORRESPONDANT**
LÖTVERFAHREN UND ENTSPRECHENDE VORRICHTUNG
BRAZING METHOD AND CORRESPONDING DEVICE

(30) Priorité: 06.12.2006 FR 0610622
(43) Date de publication de la demande: 09.09.2009
(73) Titulaire: Aircelle, 76700 Gonfreville L'Orcher (FR)
(72) Inventeur: MOTTIN, Jean-Baptiste, 75013 Paris (FR)
(74) Mandataire: Gaillarde, Frédéric F. Ch.
(86) Numéro de dépôt international: PCT/FR2007/001793
(87) Numéro de publication internationale: WO 2008/068397

(56) Documents cités:
- EP-A- 0 549 385
- EP-A- 1 552 900
- GB-A- 1 469 685
- GB-A- 2 308 680

## Description

La présente invention se rapporte à un procédé de brasage, plus particulièrement destiné au domaine aéronautique, ainsi qu'à un dispositif permettant sa mise en oeuvre. Un tel procédé et un tel dispositif sont décrits dans GB 1 469 685. Les revendications 1 et 3 concernent respectivement ledit procédé et ledit dispositif.

Le brasage est une technique d'assemblage de deux matériaux à l'aide d'un métal d'apport de nature différente possédant une température de fusion inférieure à celle des matériaux à assembler et apte à mouiller convenablement les surfaces desdits matériaux, ces surfaces ne participant pas par leur fusion à la constitution du joint brasé.

En pratique, le brasage est réalisé par interposition du métal d'apport entre les deux composants à assembler, la zone à braser étant ensuite chauffée à une température permettant la fusion du métal d'apport mais pas celle des composants à assembler. Le métal d'apport liquéfié mouille les surfaces des deux composants à assembler puis est refroidi de manière à se solidifier entre les deux composants pour en assurer la liaison.

Le chauffage de la zone à braser peut classiquement se faire par la flamme d'un chalumeau, un arc électrique, ou encore un laser. On connaît également des techniques de brasage au four sous différents types d'atmosphère.

Le métal d'apport est généralement de l'étain, du cuivre, de l'argent, de l'aluminium, du nickel ou encore des alliages de métaux précieux.

Dans certains domaines techniques, comme le domaine aéronautique par exemple, la géométrie des divers éléments revêt une importance particulière et un mauvais positionnement des pièces à assembler peut avoir un impact sur les performances générales du dispositif concerné. Ainsi, il est nécessaire de pouvoir contrôler au mieux le positionnement des pièces entre elles et l'épaisseur de la brasure.

Pour ce faire, une technique habituelle consiste à pré-assembler les pièces concernées et un feuillard du métal d'apport, en réalisant plusieurs points de soudure. Ces points de soudure sont généralement réalisés par résistance électrique.

Toutefois, un inconvénient de ce pré-assemblage est la présence de marques sur les pièces à assembler au niveau de la brasure. Ces marques diminuent la surface totale brasée. De plus, la qualité du collage réalisé n'est pas régulière et les points de soudure comprennent également du métal d'apport.

Dans le cadre d'applications de pointe telle que l'assemblage d'une peau externe destinée à former une tuyère de nacelle d'avion avec un raidisseur, on comprend aisément que ces marques constituent également des accidents de surface non désirés qui viennent diminuer les performances aérodynamiques de l'ensemble.

Par ailleurs, un tel pré-assemblage ne permet pat de tenir compte de la déformation des pièces à assembler sous l'effet de la chaleur, ce qui peut conduire à des défauts d'assemblage. Le brasage est alors réalisé sous contrainte des matériaux, ce qui peut entraîner une déformation de la ligne aérodynamique.

La présente invention a pour but de pallier les inconvénients précédemment évoqués et consiste pour cela en un Procédé de brasage de deux matériaux entre eux tel que revendiqué dans la revendication 1.

Ainsi, en exerçant sur les matériaux à assembler des efforts avant la montée en température, ceux-ci permettent aux matériaux aptes à se déplacer relativement l'un par rapport à l'autre d'être toujours maintenu en contact malgré leurs dilatations respectives et de suivre les déformations dues à cette dilatation. De cette manière les matériaux à assembler peuvent se dilater librement et il ne reste plus de contraintes de dilatation dans les matériaux à assembler lors du brasage. Par ailleurs, on évite ainsi la réalisation de points de soudure nécessaires à la phase de pré-assemblage, les efforts variables exercés sur les matériaux permettant leur maintien en contact.

De manière préférentielle, les matériaux à braser sont réalisés dans la même matière. Ainsi, les déformations dues à la dilatation des matériaux sont similaires entre les deux parties à braser.

La présente invention se rapporte également à un dispositif pour la mise en oeuvre d'un procédé de brasage tel que revendiqué dans la revendication 3.

De manière préférentielle, les moyens de contraintes élastiques comprennent des tubes de dilatation.

Alternativement ou de manière complémentaire, les moyens de contraintes élastiques comprennent des ressorts.

Alternativement encore, ou de manière complémentaire, les moyens de contraintes élastiques comprennent des lames élastiques.

Avantageusement, le deuxième support est monté mobile en translation sur un plateau présentant une liaison glissière. Préférentiellement, le plateau support est équipé d'un moyen de contrainte élastique apte à se déformer selon une direction de la glissière.

Avantageusement encore, le moyen de contrainte est monté en appui contre un moyen de butée réglable le long de la glissière.

Selon un mode de réalisation préféré de l'invention, le plateau support est monté sur un bras élastique constituant un deuxième moyen de contrainte selon une direction sensiblement normale au dit plateau support.

Avantageusement, le bras est réglable selon une direction normale au plateau support.

De manière préférentielle, le dispositif est réalisé dans un matériau possédant un coefficient de dilatation inférieur au coefficient de dilatation des matériaux à braser.

La mise en oeuvre de l'invention sera mieux comprise à l'aide de la description détaillée qui est exposée ci-dessous en regard du dessin annexé dans lequel :
La figure 1 est une représentation schématique en coupe d'une brasure selon l'art antérieur.
La figure 2 est une représentation schématique en coupe d'un dispositif de brasage selon l'invention.
La figure 3 est une représentation schématique en coupe du dispositif de la figure 2 au palier de brasage.

Les exemples qui suivent seront décrits par rapport à un opérateur souhaitant assembler par brasage une peau extérieure 1 en tôle mince chaudronnée constitutive d'une tuyère de nacelle de turboréacteur et un raidisseur 2 également en tôle mince chaudronnée. La présente invention n'est bien évidemment pas limitée à ce domaine d'application ni à ce type de matériaux.

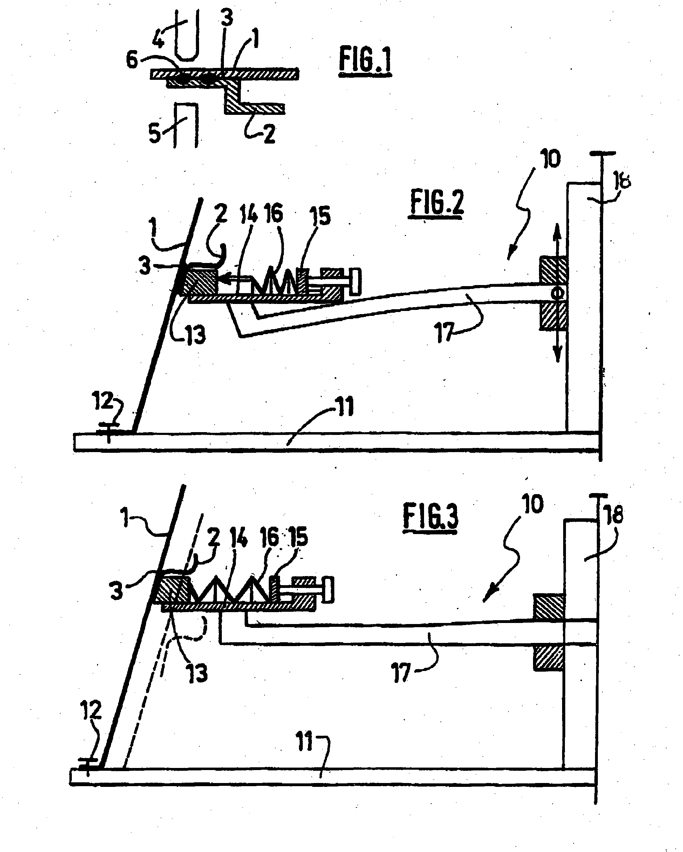

Comme représenté sur la figure 1, un procédé de réalisation d'une brasure selon l'art antérieur comprend une étape de pré-brasage visant à pré-assembler la peau externe 1, son raidisseur 2 ainsi qu'une feuille 3 d'un métal de brasure disposée en sandwich entre la peau externe 1 et son raidisseur 2. Cette étape de pré-brasage comprend la réalisation d'une pluralité de points de soudure discrets régulièrement répartis sur la zone à braser et réalisés à l'aide d'un jeu d'électrodes 4, 5.

Comme expliqué précédemment, la réalisation de ces points de soudure laisse des marques affectant les performances aérodynamiques de la peau externe 1 et les points de soudure comprennent à la fois du métal en provenance de la peau externe 1, du métal en provenance du raidisseur 2 et du métal de la feuille 3 de métal de brasure. Ceci résulte en des points de soudure non-homogènes qui peuvent être fragilisés.

La présente invention permet de pallier ces inconvénients et consiste à supprimer l'étape de pré-assemblage par soudure en mettant en contact la peau externe 1 et le raidisseur 2 au niveau de la zone de brasure sous contraintes extérieures permettant de suivre les efforts de dilatation tout en maintenant les matériaux en contact.

Ce procédé peut être mis en oeuvre grâce à un dispositif 10 selon l'invention tel que représenté sur les figures 2 et 3.

Le dispositif 10 comprend, d'une part, un plateau de base 11 sur lequel est fixé la peau externe 1 à braser à l'aide d'une bride 12 de fixation, et d'autre part, un secteur d'appui 13, préférentiellement réalisé en carbone, sur lequel est fixé le raidisseur 2.

Ce secteur d'appui 13 est monté coulissant sur un plateau support 14 par l'intermédiaire d'une liaison glissière, le plateau support présentant une butée réglable 15 disposé dans l'axe de la liaison glissière à l'opposé du secteur d'appui 13 et servant d'appui à un moyen de contrainte élastique 16 se présentant sous la forme d'un ressort ou de tubes de dilatation.

Le plateau support 14 est supporté par au moins un bras 17, également réalisé dans une matière élastique, par exemple un ressort lame, et fixé dans une paroi 18 perpendiculaire au plateau de base 12. Plus précisément, le bras 17 est fixé de manière réglable le long de la paroi 18.

Avant installation de la peau externe 1 et du raidisseur 2, les moyens de contraintes élastiques sont calibrés de manière à se trouver au repos et ne plus exercer d'effort sur le secteur d'appui 13 lorsque celui-ci est dans la position où les deux matériaux sont en contact à la température de brasage après s'être dilaté. Des calculs de dilatation ou des expériences permettent de connaître ces positions. Les moyens de contrainte élastique 16 et le bras 17 sont réglés au repos dans cette position grâce respectivement à la butée réglable 15 et au support réglable du bras 17 le long de la paroi 18.

Lors de la fixation sur le dispositif des éléments à braser, à savoir la peau externe 1 et le raidisseur 2, ceux-ci sont à température ambiante et ne sont donc pas dilatés.

Par conséquent, le secteur d'appui 13 est forcé en retrait par rapport à sa position ayant servie à calibrer les moyens de contraintes élastiques 16 et le bras élastique 17.

De ce fait, le moyen de contrainte élastique 16 est légèrement comprimé et exerce sur le secteur d'appui un effort selon la direction de la glissière.

Il en va de même pour le bras 17 qui exerce donc un effort selon une direction normale au plateau support 14 et à la glissière.

La figure 2 représente l'ensemble du dispositif décrit à température ambiante avant début du cycle de brasage.

Lors de la mise en chauffe, la peau externe 1 et le raidisseur 2 sont soumis à des efforts de dilatation et leur position relative se modifie. Plus précisément, la peau externe 1 a tendance à s'écarter du raidisseur 2. Les positions initiales de la peau externe 1 et du raidisseur 2 sont représentées en lignes pointillées sur la figure 3.

Le dispositif 10 selon la présente invention permet de suivre ces efforts de dilation et de s'y adapter alors que l'ensemble à braser se trouve dans le four de brasage et est inaccessible.

En effet, le raidisseur 2 étant monté sur un secteur d'appui mobile sur lequel s'exercent des efforts tendant à le maintenir vers la peau externe 1, l'éloignement de cette dernière permet le déplacement du secteur d'appui 13 le long de la glissière ainsi que la remontée du plateau support 14 sous l'effet respectivement du moyen de contrainte élastique 16 et du bras élastique 17, le raidisseur étant donc constamment maintenu en contact avec la peau externe 2 en fonction des dilatations.

Le moyen de contrainte élastique 16 et le bras 17 étant calibrés de manière à ne plus exercer d'effort de contrainte sur le secteur d'appui 13 lorsque la peau externe 1 et le raidisseur 2 sont à température de brasage, il ne reste plus d'efforts de dilatation ni de contrainte s'exerçant entre les éléments à braser au pallier de brasage.

## Revendications

1. Procédé de brasage de deux matériaux (1, 2) entre eux à l'aide d'un métal d'apport (3) comprenant les étapes visant à :
- placer le métal d'apport entre les deux matériaux en contact au niveau d'une zone de brasure où ceux-ci sont destinés à être liés,
- exercer sur au moins l'un des deux matériaux monté mobile un effort de contrainte selon chacune des directions de dilatation prévue pour les deux matériaux,
- amener l'ensemble au niveau de la zone de brasure à une température dite de brasage à la fois supérieure à la température de fusion du métal d'apport et inférieure à la température de fusion de chacun des deux matériaux.
- lors de la montée en température, diminuer les efforts exercés sur les matériaux à assembler au fur et à mesure de la dilation desdits matériaux de manière à ce qu'aucun effort ne s'exerce plus sur les matériaux lorsque la température de brasage est atteinte.
- une fois le métal d'apport fondu et mouillant chaque matériaux à assembler, refroidir l'ensemble de manière a solidifier le métal d'apport qui assure alors une liaison entre les deux matériaux.

2. Procédé selon la revendication 1, **caractérisé en ce que** les matériaux (1, 2) à braser sont réalisés dans la même matière.

3. Dispositif (10) pour la mise en oeuvre d'un procédé de brasage selon l'une quelconque des revendications 1 ou 2, comprenant un premier support (11) destiné à recevoir et maintenir un premier matériau (1), un deuxième support (13) destiné à recevoir et maintenir un deuxième matériau (2) à assembler avec le premier matériau par brasage et des moyens de contrainte élastique, **caractérisé en ce que** le deuxième support est apte à se déplacer sous l'action desdits moyens de contrainte élastique (16, 17), entre une position avant brasage et une position finale correspondant à une position dilatée à température de brasage, lesdits moyens de contrainte élastique étant conformés pour exercer une contrainte sensiblement nulle lorsque le deuxième support est en position finale.

4. Dispositif (10) selon la revendication 3, **caractérisé en ce que** les moyens de contrainte élastique comprennent des tubes de dilatation (16).

5. Dispositif (10) selon l'une quelconque des revendications 3 ou 4, **caractérisé en ce que** les moyens de contrainte élastique comprennent des ressorts.

6. Dispositif (10) selon l'une quelconque des revendications 3 à 5, **caractérisé en ce que** les moyens de contrainte élastique comprennent des lames élastiques (17).

7. Dispositif (10) selon l'une quelconque des revendications 3 à 6, **caractérisé en ce que** le deuxième support (13) est monté mobile en transition sur un plateau support (14) présentant une liaison glissière.

8. Dispositif (10) selon la revendication 7, **caractérisé en ce que** le plateau support (14) est équipé d'un moyen de contrainte élastique (16) apte à se déformer selon une direction de la glissière.

9. Dispositif (10) selon la revendication 7, **caractérisé en ce que** le moyen de contrainte élastique (16) est monté en appui contre un moyen de butée (15) réglable le long de la glissière.

10. Dispositif (10) selon la revendication 8, **caractérisé en ce que** le plateau support (14) est monté sur au moins un bras élastique (17) constituant un deuxième moyen de contrainte selon une direction sensiblement normale au dit plateau support.

11. Dispositif (10) selon la revendication 10, **caractérisé en ce que** le bras élastique (17) est réglable selon une direction normale au plateau support (14).

12. Dispositif (10) selon l'une quelconque des revendications 3 à 11, **caractérisé en ce que** le dispositif, est réalisé dans un matériau possédant un coefficient de dilatation inférieur au coefficient de dilatation des matériaux (1, 2) à braser.

## Patentansprüche

1. Verfahren zum Löten von zwei Materialien (1, 2) untereinander mit Hilfe eines Füllmetalls (3), umfassend die folgenden Schritte:
- Anbringen des Füllmetalls zwischen den zwei Kontaktmaterialien auf der Ebene eines Lotbereichs, an dem diese verbunden werden sollen,
- Ausüben auf mindestens einem der zwei beweglich montierten Materialien einer Spannungskraft in jede der Dehnrichtungen, die für die zwei Materialien vorgesehen sind,
- Bringen der Einheit auf der Ebene des Lötbereichs auf eine Temperatur, genannt Löttemperatur, die gleichzeitig höher als die Fusionstemperatur des Füllmetalls und niedriger als die Fusionstemperatur jedes der zwei Materialien ist,
- während des Anstiegs der Temperatur Verringern der Kräfte, die auf die zu verbindenden Materialien ausgeübt werden, je nach der Dehnung der Materialien, so dass keine Kraft mehr auf die Materialien ausgeübt wird, wenn die Löttemperatur erreicht ist.
- nachdem das Füllmetall geschmolzen ist und jedes zu verbindende Material benetzt, Abkühlen der Einheit, um das Füllmetall auszuhärten, das nun eine Verbindung zwischen den zwei Materialien sicherstellt.

2. Verfahren nach Anspruch 1, **dadurch gekennzeichnet, dass** die zu lötenden Materialien (1, 2) aus dem gleichen Stoff hergestellt sind.

3. Vorrichtung (10) zur Durchführung eines Lötverfahrens nach einem der Ansprüche 1 oder 2, umfassend einen ersten Träger (11), der ausgelegt ist, um ein erstes Material (1) aufzunehmen und zu halten, einen zweiten Träger (13), der ausgelegt ist, um ein zweites Material (2) aufzunehmen und zu halten, zur Verbindung mit dem ersten Material durch Löten und elastische Spannungsmittel, **dadurch gekennzeichnet, dass** der zweite Träger ausgelegt ist, um sich unter der Einwirkung der elastischen Spannungsmiftel (16, 17) zwischen einer Position vor dem Löten und einer Endposition zu bewegen, die einer ausgedehnten Position bei Löttemperatur entspricht, wobei die elastischen Spannungsmittel ausgelegt sind, um eine 'Spannung auszuüben, die im Wesentlichen null ist, wenn sich der zweite Träger in der Endposition befindet.

4. Vorrichtung (10) nach Anspruch 3, **dadurch gekennzeichnet, dass** die elastischen Spannungsmittel Dehnungsrohre (16) umfassen.

5. Vorrichtung (10) nach einem der Ansprüche 3 oder 4, **dadurch gekennzeichnet, dass** die elastischen Spannungsmittel Federn umfassen.

6. Vorrichtung (10) nach einem der Ansprüche 3 bis 5, **dadurch gekennzeichnet, dass** die elastischen Spannungsmittel elastische Blätter (17) umfassen.

7. Vorrichtung (10) nach einem der Ansprüche 3 bis 6, **dadurch gekennzeichnet, dass** der zweite Träger (13) beweglich in Translation auf einer Trägerplatte (14) montiert ist, die eine Gleitverbindung aufweist.

8. Vorrichtung (10) nach Anspruch 7, **dadurch gekennzeichnet, dass** die Trägerplatte (14) mit einem elastischen Spannungsmittel (16) ausgestattet ist, das ausgelegt ist, um sich gemäß einer Richtung der Gleitschiene zu verformen.

9. Vorrichtung (10) nach Anspruch 7, **dadurch gekennzeichnet, dass** das elastische Spannungsmittel (16) in Auflage gegen ein Anschlagmittel (15) montiert ist, das entlang der Gleitschiene eingestellt werden kann.

10. Vorrichtung (10) nach Anspruch 8, **dadurch gekennzeichnet, dass** die Trägerplatte (14) auf mindestens einem elastischen Arm (17) montiert ist, der ein zweites Spannungsmittel gemäß einer im Wesentlichen normalen Richtung zur der Trägerplatte darstellt.

11. Vorrichtung (10) nach Anspruch 10, **dadurch gekennzeichnet, dass** der elastische Arm (17) gemäß einer normalen Richtung zur Trägerplatte (14) eingestellt werden kann.

12. Vorrichtung (10) nach einem der Ansprüche 3 bis 11, **dadurch gekennzeichnet, dass** die Vorrichtung aus einem Material hergestellt ist, das einen Dehnungskoeffizienten aufweist, der kleiner als der Dehnungskoeffizient der zu lötenden Materialien (1, 2) ist.

## Claims

1. A method of brazing two materials (1, 2) together by means of a filler metal (3) comprising the steps aiming at:
- placing the filler metal between the two materials in contact at a brazing region where materials are intended to be bound,
- exerting on at least one movably mounted material of the two materials a stress force according to each of the directions of expansion provided for both materials,
- bringing the assembly at the brazing region to a so-called brazing temperature being both higher than the melting temperature of the filler metal and lower than the melting temperature of each of the two materials,
- during the rise in temperature, reducing the forces exerted on the materials to be assembled as said materials expand in such a manner that no force is exerted anymore on the materials when the brazing temperature is reached.
- once the filler metal is melted and has wet each material to be assembled, cooling the assembly so as to solidify the filler metal which then ensures a binding between the two materials.

2. The method according to claim 1, **characterized in that** the materials (1, 2) to be brazed are made up in the same material.

3. A device (10) for the implementation of a brazing method according to any one of claims 1 or 2, comprising a first support (11) intended to receive and hold a first material (1), a second support (13) intended to receive and hold a second material (2) to be assembled with the first material by brazing and elastic stress means, **characterized in that** the second support is capable of moving under the action of said elastic stress means (16, 17), between a pre-brazing position and a final position corresponding to an expanded position at brazing temperature, said elastic stress means being shaped to exert a substantially zero stress when the second support is in final position.

4. The device (10) according to claim 3, **characterized in that** the elastic stress means comprise expansion tubes (16).

5. The device (10) according to any one of claims 3 or 4, **characterized in that** the elastic stress means comprise springs.

6. The device (10) according to any one of claims 3 to 5, **characterized in that** the elastic stress means comprise elastic blades (17).

7. The device (10) according to any one of claims 3 to 6, **characterized in that** the second support (13) is mounted to be moved in translation on a support plate (14) having a sliding connection.

8. The device (10) according to claim 7, **characterized in that** the support plate (14) is equipped with an elastic stress means (16) adapted to deform according to a direction of the slide.

9. The device (10) according to claim 7, **characterized in that** the elastic stress means (16) is mounted to rest against an abutment means (15) adjustable along the slide.

10. The device (10) according to claim 8, **characterized in that** the support plate (14) is mounted on at least one elastic arm (17) constituting a second stress means according to a direction substantially normal to said support plate.

11. The device (10) according to claim 10, **characterized in that** the elastic arm (17) is adjustable according to a direction normal to the support plate (14).

12. The device (10) according to any one of claims 3 to 11, **characterized in that** the device is made up from a material having an expansion coefficient lower than the expansion coefficient of materials (1, 2) to be brazed.
